Europäisches Patentamt

**European Patent Office**

**Office européen des brevets**

(11) Veröffentlichungsnummer: **0 303 769**
**A2**

# EUROPÄISCHE PATENTANMELDUNG

(21) Anmeldenummer: **88106545.2**

(22) Anmeldetag: **23.04.88**

(51) Int. Cl.4: **F16J 15/50**

(30) Priorität: **18.08.87 CH 3171/87**

(43) Veröffentlichungstag der Anmeldung:
**22.02.89 Patentblatt 89/08**

(84) Benannte Vertragsstaaten:
**CH DE FR GB IT LI NL SE**

(71) Anmelder: **BALZERS AKTIENGESELLSCHAFT**

**FL-9496 Balzers(LI)**

(72) Erfinder: **Schädler, Walter**
**Landstrasse 353**
**FL-9495 Triesen(LI)**

(54) **Vorrichtung zur Übertragung von Drehbewegungen durch die Wand einer Vakuumkammer.**

(57) Drehdurchführungen durch die Wand von Vakuumkammern mussten bisher geschmiert werden, um ein Kaltverschweissen der metallischen Welle mit den Vakuumdichtringen zu vermeiden. Die Erfindung betrifft eine neue Konstruktion, bei der die Innenwand der Bohrung durch die Wand der Vakuumkammer, durch welche die Welle hindurchgeführt ist, mit einer Hülse aus einem reibungsarmen Kunststoff, vorzugsweise Polytetrafluoräthylen, ausgekleidet ist, wobei die Hülse gegenüber der Innenwand und gegenüber der Welle durch Dichtringe, vorzugsweise aus einem Elastomer abgedichtet ist. Dadurch wird eine gleichbleibende minimale Reibung ohne die Notwendigkeit der Verwendung zusätzlicher Schmiermittel und eine sichere Abdichtung auch bei höchster Beanspruchung im Trockenlauf erreicht.

EP 0 303 769 A2

## Vorrichtung zur Uebertragung von Drehbewegungen durch die Wand einer Vakuumkammer

Die vorliegende Erfindung betrifft eine Vorrichtung zur Uebertragung von Drehbewegungen in eine Vakuumkammer, welche eine in einer Bohrung der Kammerwand geführte, die Drehbewegung übertragende Welle sowie zwischen der Innenwand der Bohrung und der Welle Dichtringe zur vakuumdichten Abdichtung aufweist.

Bei Drehdurchführungen mit Dichtungen der bisher üblichen Bauart (z.B. mit Lippendichtungen) ist eine Schmierung der Gleitflächen unbedingt erforderlich. Das Schmiermittel hat vor allem die Aufgabe, einen Schmierfilm zwischen den Gleitflächen der Welle und der Dichtringe zu bilden, und der gegenseitige Anpressdruck der Gleitflächen muss stets so bemessen werden, dass sich ein hinreichend dicker Schmierfilm ausbilden kann. Im günstigsten Falle lässt sich dadurch ein Reibungskoeffizient von etwa 0,05 erreichen. Ein solcher Schmierfilm besitzt aber stets die unerwünschte Eigenschaft, entlang der von ihm benetzten Oberflächen zu fliessen, und er kann dadurch auch in das Innere der Vakuumkammer gelangen und diese verunreinigen. Versucht man die Nachlieferung des Schmiermittels z.B. durch Erhöhung des Anpressdruckes zwischen Welle und Dichtringen oder durch Verwendung hochviskoser Schmieröle oder Fette zu verringern, so führt dies nicht nur zu einer unerwünschten Erhöhung des Reibungskoeffizienten sondern oft auch zu einem Trockenlauf der Gleitflächen und infolge der schlechten Notlaufeigenschaften des Dichtmaterials oft zum sogenannten "Anfressen", was eine nicht reparierbare Beschädigung darstellt und Undichtigkeit zur Folge hat. Bis heute wurde noch kein Dichtmaterial gefunden, das gegenüber metallischen Oberflächen auch bei stärkerer Belastung hinreichend sichere Notlaufeigenschaften besitzt. Durch die Verwendung von Molybdändisulfid als Gleitmittel kann man zwar den Reibungskoeffizienten auch beim Trockenlauf relativ niedrig halten, doch ist das Problem damit nicht gelöst. Eine nur einmalige Verletzung eines solchen Schmierfilms heilt nämlich nicht von selbst aus sondern kann weiter um sich greifen und den völligen Verlust der Notlaufeigenschaften herbeiführen. Ausserdem ist der Reibungskoeffizient (mit $\mu$ ungefähr gleich 0,1) immer noch relativ hoch, so dass bei stärkerer Belastung und infolge der geringen Wärmeleitung eines jeden Dichtmaterials eine thermische Ueberbeanspruchung der Dichtung eintreten kann.

Die vorliegende Erfindung stellt sich nun die Aufgabe, diese Nachteile bekannter Dichtungen zu mildern und eine Drehdurchführung für Vakuumgeräte zur Verfügung zu stellen, welche ohne jedes Schmiermittel auskommt und eine möglichst geringe Abnützung und also eine lange Gebrauchsdauer ergibt.

Diese Aufgabe wird bei einer Vorrichtung zur Uebertragung von Drehbewegungen durch die Wand einer Vakuumkammer, welche eine in einer Bohrung der Kammerwand geführte, die Drehbewegung übertra gende Welle sowie zwischen der Innenwand der Bohrung und der Welle Dichtringe zur vakuumdichten Abdichtung aufweist, gemäss Erfindung dadurch gelöst, dass die Innenwand der Bohrung mit einer Hülse aus einem reibungsarmen Kunststoff ausgekleidet ist und die Hülse ihrerseits mittels Dichtringen gegenüber der Innenwand der Bohrung und gegenüber der Welle abgedichtet ist.

In einer bevorzugten Ausgestaltung der Erfindung wird vorgesehen, dass die Hülse aus Polytetrafluoräthylen (PTFE, Handelsname "Teflon") und die Dichtringe aus einem Elastomer bestehen, da sich gezeigt hat, dass besonders mit einer solchen Werkstoffpaarung eine Drehdurchführung mit minimaler gleichbleibender Reibung und sicherer Dichtung ohne Verwendung eines zusätzlichen Schmiermittels geschaffen werden kann. Eine erfindungsgemässe Drehdurchführung lässt sich mit geringen Abmessungen bauen, deren Dichtfähigkeit selbst nach einer grossen Anzahl von Drehbewegungen (z.B.100 000) noch voll erhalten bleibt, und sie kann aus einfachen leicht herstellbaren Drehteilen zusammengesetzt werden. Die für vakuumdichte Drehdurchführungen oft bestehende weitere Forderung, dass ausser einer sicheren Vakuumabdichtung gleichzeitig auch hinreichende Notlaufeigenschaften gegeben sein müssen, wird mit der erwähnten bevorzugten Ausführungsform der Erfindung ebenfalls erfüllt. Einerseits ist nämlich die Elastizität und Plastizität der Dichtringe hinreichend gross, um die Dichtungs aufgabe erfüllen zu können, und andererseits besitzt Polytetrafluoräthylen bekanntlich nicht nur einen sehr kleinen Reibungskoeffizienten, ($\mu$ = 0,02) sondern (wie z.B. die Veröffentlichung von Bowden und Tabor in British Journal of Applied Physics, 1966, Vol.17, Seite 1521 zeigt) auch die besondere Eigenschaft, dass beim Gleiten aneinander reibende Teile der genannten Werkstoffpaarung auch bei höchster Beanspruchung nicht miteinander verschweissen. Alle anderen bekannten Werkstoffe verschweissen dagegen, sobald der Reibungswiderstand einen bestimmten Wert erreicht.

Will man die hervorragenden Notlaufeigenschaften für eine Drehdurchführung ausnutzen, muss man durch eine geeignete konstruktive Gestaltung dafür sorgen, dass der gegenseitige Anpressdruck der Gleitflächen trotz möglicher ireversibler plastischer Verformung, welche sich nicht ganz vermeiden lässt, konstant bleibt. Mit der Konstruktion gemäss Anspruch 1 vorlieger Erfindung wird auch dieses Ziel erreicht.

Nachfolgend wird die Erfindung anhand eines Ausführungsbeispiels noch näher erläutert:

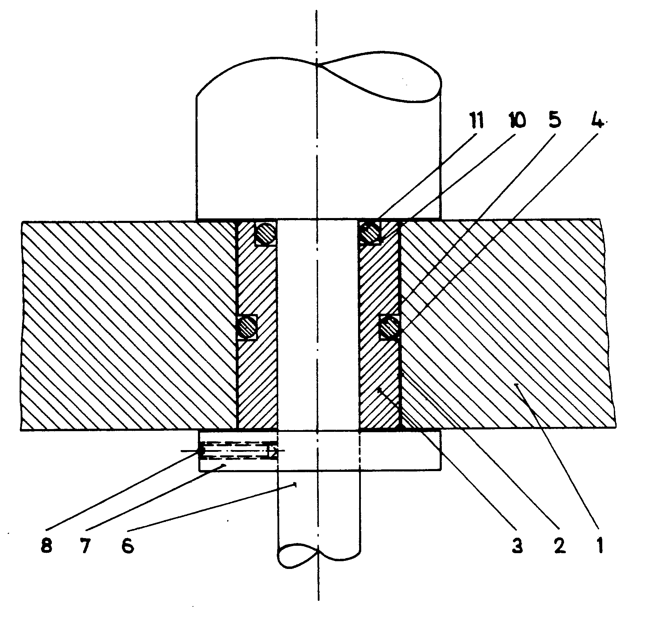

Die Zeichnung zeigt einen Schnitt durch eine Vakuumdrehdurchführung durch den Boden einer Vakuumkammer.

Der Boden 1 mit einer Stärke von beispielsweise 13 mm weist eine Bohrung von 10 mm lichter Weite auf, deren Innenwand 2 mit einer Auskleidung in Form einer Muffe oder Hülse 3 aus Polytetrafluor äthylen versehen ist. Die Aussenseite der Hülse 3 liegt, wie die Zeichnung zeigt, satt an die Innenwand 2 der Bohrung an und ist gegenüber dieser durch eine in eine Ringnut 4 eingelegte Dichtung 5 abgedichtet. Im Beispielsfalle besteht diese Dichtung z. B. aus einem üblichen Vakuumdichtungsmaterial, vorzugsweise aus einem Elastomer. Die die Drehung übertragende Welle 6 ist durch die Hülse 3 hindurchgeführt und ist, um sie axial zu fixieren, auf einer (in der Zeichnung oberen) Seite der Wand in ihrem Durchmesser verstärkt und auf der anderen Seite mit einer Ringscheibe 7 verbunden, die mittels einer Schraube 8 an der Welle 6 befestigt werden kann. Mit dieser Konstruktion wird die Lage der Achse in axialer Richtung festgelegt und gleichzeitig erreicht, dass das Polytetrafluoräthylen der Hülse 3 sich nicht im Laufe der Zeit verformen beziehungsweise wegfliessen kann.

Zur Abdichtung der Welle 6 gegenüber der Innenwand der Hülse ist diese mit einer Schulter 10 versehen, in welche ein weiterer Dichtring 11 eingelegt ist, der vorzugsweise ebenfalls aus einem Elastomer besteht.

Wenn bei Benutzung der beschriebenen Einrichtung die Welle 6 in der Hülse 3 gedreht wird, bewegt sich der Dichtring 11 mit der Welle mit, gleitet also seinerseits ebenfalls nur an einer Polytetrafluoräthylen-Oberfläche der Schulter 10, was eine geringe Reigung ergibt. Der Dichtring 5 dagegen, der die Hülse 3 gegenüber der Innenwand 2 der Bohrung abdichtet, steht fest.

Ein in vielen Anwendungsfällen wichtiger weiterer Vorteil der Erfindung liegt darin, dass sich damit Drehdurchführungen mit Wellen von sehr geringem Durchmesser bauen lassen. Während nämlich die ringförmigen Lippendichtungen klassischer Drehdurchführungen höchstens bis zu einem Durchmesser von etwa 4 mm herab kommerziell erhältlich sind, gibt es die Rundschnurdichtungen, wie sie bei der Erfindung gebraucht werden, auch für kleinere Durchmesser von beispielsweise nur 2mm. Wenn im gegebenen Anwendungsfall also eine so dünne Welle für die Uebertragung des gewünschten Drehmomentes in den Vakuumraum an sich genügt, hat ein solcher kleinerer Durchmesser den Vorteil, dass die Reibung geringer wird, so dass dann auch billigere Motoren von geringerer Leistung eingesetzt werden können.

Wie aus der Zeichnung ersichtlich, sind bei der beschriebenen Anordnung die Hülse 3 sowie die Dichtungsringe 5 und 11 so zwischen anderen Bauteilen eingeschlossen, dass sie weder einer ihre Funktion beeinträchtigenden plastischen Verformung unterliegen noch beim Betrieb durch irgendwelche Kräfte aus ihrer funktionsgerechten Lage verdrängt werden können.

Die in der Zeichnung dargestellte Drehdurchführung durch den Boden einer Vakuumkammer kann natürlich in entsprechender Weise auch als Drehdurchführung durch eine beliebige Wand einer Vakuumkammer Verwendung finden.

## Ansprüche

1. Vorrichtung zur Uebertragung von Drehbewegungen durch die Wand einer Vakuumkammer, welche eine in einer Bohrung der Kammerwand geführte, die Drehbewegung übertragende Welle sowie zwischen der Innenwand der Bohrung und der Welle Dichtringe zur vakuumdichten Abdichtung aufweist, dadurch gekennzeichnet, dass die Innenwand (2) der Bohrung mit einer Hülse (3) aus einem reibungsarmen Kunststoff ausgekleidet ist und die Hülse ihrerseits mittels Dichtringen (5,11) gegenüber der Innenwand der Bohrung und gegenüber der Welle (16) abgedichtet ist.

2. Vorrichtung nach Anspruch 1, dadurch gekennzeichnet, dass die Hülse (3) aus Polytetrafluoräthylen besteht.

3. Vorrichtung nach Anspruch 1, dadurch gekennzeichnet, dass die Dichtringe (5,11) aus einem Elastomer bestehen.